Europäisches Patentamt

European Patent Office

Office européen des brevets

(19)

(11) Publication number: **0 183 314**
**B1**

(12) **EUROPEAN PATENT SPECIFICATION**

(45) Date of publication of patent specification: **23.08.89**　(51) Int. Cl.⁴: **C 08 F 6/00**

(21) Application number: **85201875.3**

(22) Date of filing: **14.11.85**

(54) **Process for purifying a copolymer containing acrylonitrile groups.**

(30) Priority: **15.11.84 NL 8403488**

(43) Date of publication of application:
**04.06.86 Bulletin 86/23**

(45) Publication of the grant of the patent:
**23.08.89 Bulletin 89/34**

(84) Designated Contracting States:
**BE DE FR GB IT NL**

(56) References cited:
**EP-A-0 006 341**
**EP-A-0 068 146**
**EP-A-0 071 793**
**FR-A-2 291 987**
**US-A-4 193 903**

(73) Proprietor: **STAMICARBON B.V.**
**P.O. Box 53**
**NL-6160 AB Geleen (NL)**

(72) Inventor: **Kleintjens, Ludovicus Anna Leonard**
**Tossaintsstraat 5**
**NL-6171 HN Stein (L.) (NL)**

Courier Press, Leamington Spa, England.

## Description

The invention relates to a process for purifying a copolymer containing acrylonitrile groups.

Examples of copolymers containing acrylonitrile groups are acrylonitrile-butadiene-styrene copolymers (ABS) and styreneacrylonitrile copolymers (SAN). After the polymerization such copolymers contain all sorts of impurities, particularly unconverted acrylonitrile. The impurity present in all copolymers containing acrylonitrile groups is the acrylonitrile that allows itself to be virtually completely removed from such copolymers with very great difficulty. This removal of acrylonitrile must be very thorough in view of the high toxicity of this material.

The present invention provides a very simple and yet effective solution for purifying copolymers containing acrylonitrile groups. According to the invention a process for purifying copolymers containing acrylonitrile groups is characterized in that, per kg impurities in the copolymer, the copolymer is treated with at least 1 $Nm^3$ (NPT) of an extractant chosen from substances the critical temperature of which is lower than 435 K, at a temperature higher than 0.9 time the critical temperature of the extractant and at a pressure higher than 0.9 time the critical pressure of the extractant. Here and elsewhere in the text and in the claims $Nm^3$ (NPT) is understood to mean the number of $m^3$ of the relative substance measured at a pressure of 1 bar and a temperature of 273 K. Suitable examples of these substances are $SO_2$, $N_2O$, NO, CO, $CH_4$, $N_2$, $CO_2$, ethylene and propylene and mixtures of these components among themselves and/or with less than 50% (vol) other components, which mixtures must have a critical temperature lower than 470 K. Of these examples most preference is given to $CO_2$ and ethylene. The fact is that $CO_2$ and ethylene are highly effective extractants which are very cheap and readily available. Critical temperature and critical pressure are understood in this connection to mean the temperature and the pressure going with the gas-liquid critical point.

A very effective duration of the treatment using the extractant is between 0.1 minute and 5 hours, preferably between 5 minutes and 5 hours. A longer duration of the treatment is possible, but does not result in an appreciably better degree of purification.

A very effective temperature for the treatment using the extractant is between 0.9 time the critical temperature of the extractant and 600 K, preferably between 290 and 470 K.

A very effective pressure for the treatment using the extractant is between 0.9 time the critical pressure of the extractant and, prompted only by practical considerations such as high costs of extreme-pressure equipment, 10 times the critical pressure of the extractant, preferably between 65 and 500 bar.

A very effective amount of extractant per kg impurities in the copolymer to be purified is between 1 and 1500 $Nm^3$ (NPT). A lower amount of extractant results in too low a degree of purification and a higher amount only results in an increase in costs and not in an appreciably better degree of purification. Preference is given to using at least 40 $Nm^3$ extractant per kg impurities in the copolymer to be purified.

A major advantage of the process according to the invention is the substantial improvement of the heat distortion temperature (HDT) of the purified copolymer containing acrylonitrile groups compared with the HDT of the copolymer containing acrylonitrile groups before the purification.

The process according to the invention is further elucidated by means of the following examples.

### Example I

Into an autoclave of 50 $cm^3$ 20 g ABS powder is fed. This powder contains 0.11% (wt) acrylonitrile (ACN), 0.03% (wt) α-methylstyrene (AM), 0.30% (wt) unsubstituted styrene (US) and 0.23% (wt) other organic impurities (OOI).

For 30 minutes $CO_2$ is passed through this ABS powder at a rate of 0.548 $Nm^3$ (NTP) per hour at a pressure of 180 bar and a temperature of 313 K.

After this extraction treatment the remaining ABS powder is analyzed. This ABS powder now contains only less than 0.01% (wt) ACN, less than 0.01% (wt) AM, less than 0.01% (wt) US and less than 0.1% (wt) OOI.

### Example II

Into an autoclave of 50 $cm^3$ is fed 20 g of an ABS powder the same as that used in example I.

For 60 minutes $CO_2$ is passed through this ABS powder at a rate of 0.420 $Nm^3$ (NTP) per hour at a pressure of 180 bar and a temperature of 313 K.

After this extraction treatment the remaining ABS powder is analyzed. This ABS powder now contains only less than 0.01% (wt) ACN, less than 0.01% (wt) AM, 0.01% (wt) US and less than 0.1% (wt) OOI.

### Example III

Into an autoclave of 50 $cm^3$ is fed 20 g of an ABS powder the same as that used in example I.

For 15 minutes $CO_2$ is passed through this ABS powder at a rate of 0.552 $Nm^3$ (NTP) per hour at a pressure of 180 bar and a temperature of 313 K.

After this extraction treatment the remaining ABS powder is analyzed. This ABS powder now contains only less than 0.01% (wt) ACN, less than 0.01% (wt) AM, less than 0.01% (wt) US and less than 0.1% (wt) OOI.

### Example IV

Into an autoclave of 50 $cm^3$ is fed 20 g of an ABS powder the same as that used in example I.

For 15 minutes $CO_2$ is passed through this ABS powder at a rate of 0.516 $Nm^3$ (NTP) per hour at a pressure of 300 bar and a temperature of 313 K.

After this extraction treatment the remaining ABS powder is analyzed. This ABS powder now contains only less than 0.01% (wt) ACN, less than 0.01% (wt) AM, 0.03% (wt) US and less than 0.1% (wt) OOI.

### Example V

Into an autoclave of 50 cm³ is fed 20 g of an ABS powder the same as that used in example I.

For 15 minutes $CO_2$ is passed through this ABS powder at a rate of 0.532 Nm³ (NTP) per hour at a pressure of 180 bar and a temperature of 308 K.

After this extraction treatment the remaining ABS powder is analyzed. This ABS powder now contains only less than 0.01% (wt) ACN.

less than 0.01% (wt) AM, 0.03% (wt) US and less than 0.1% (wt) OOI.

### Example VI

Into an autoclave of 50 cm³ is fed 20 g of an ABS powder the same as that used in example I.

For 15 minutes ethylene is passed through this ABS powder at a rate of 0.550 Nm³ (NTP) per hour at a pressure of 300 bar and a temperature of 313 K.

After this extraction treatment the remaining ABS powder is analyzed. This ABS powder now contains only less than 0.01% (wt) ACN, less than 0.01% (wt) AM, 0.02% (wt) US and less than 0.1% (wt) OOI.

### Example VII

Into an autoclave of 2000 cm³ 300 g ABS powder is fed. This powder contains 0.08% (wt) ACN, 0.19% (wt) AM, 0.16% (wt) US and I.17% (wt) OOI.

For 90 minutes $CO_2$ is passed through this ABS powder at a rate of 2.003 Nm³ (NTP) per hour at a pressure of 180 bar and a temperature of 313 K.

After this extraction treatment the remaining ABS powder is analyzed. This ABS powder now contains only less than 0.01% (wt) ACN, less than 0.01% (wt) AM, less than 0.01% (wt) US and 0.12% (wt) OOI.

The HDT of this cleaned ABS powder is 10 K higher than the HDT of the starting ABS powder.

### Example VIII

Into an autoclave of 2000 cm³ is fed 300 g of an ABS powder the same as that used in example VI.

For 300 minutes $CO_2$ is passed through this ABS powder at a rate of 0.576 Nm³ (NTP) per hour at a pressure of 180 bar and a temperature of 313 K.

After this extraction treatment the remaining ABS powder is analyzed. This ABS powder now contains only less than 0.01% (wt) ACN, less than 0.01% (wt) AM, less than 0.01% (wt) US and less than 0.1% (wt) OOI.

The HDT of this cleaned ABS powder is 10 K higher than the HDT of the starting ABS powder.

### Example IX

Into an autoclave of 50 cm³ 20 g SAN granules is fed. These granules contain 0.53% (wt) ACN, 2.27% (wt) US and 0.12% (wt) OOI.

For 30 minutes $CO_2$ is passed through these SAN granules at a rate of 0.464 Nm³ (NTP) per hour at a pressure of 180 bar and a temperature of 313 K.

After this extraction treatment the remaining SAN granules are analyzed. These SAN granules now contain only less than 0.01% (wt) ACN, less than 0.01% (wt) US and less than 0.01% (wt) OOI.

### Example X

Into an autoclave of 50 cm³ is fed 20 g of the same SAN granules as used in example IX.

For 60 minutes $CO_2$ is passed through these SAN granules at a rate of 0.431 Nm³ (NTP) per hour at a pressure of 180 bar and a temperature of 313 K.

After this extraction treatment the remaining SAN granules are analyzed. These SAN granules now contain only less than 0.01% (wt) ACN and less than 0.01% (wt) US and less than 0.01% (wt) OOI.

### Example XI

Into an autoclave of 50 cm³ is fed 20 g of the same SAN granules as used in example VIII.

For 60 minutes $CO_2$ is passed through these SAN granules at a rate of 0.438 Nm³ (NTP) per hour at a pressure of 300 bar and a temperature of 313 K.

After this extraction treatment the remaining SAN granules are analyzed. These SAN granules now contain only less than 0.01% (wt) ACN, less than 0.01% (wt) US and less than 0.01% (wt) OOI.

**Claims**

1. Process for purifying a copolymer containing acrylonitrile groups, characterized in that, per kg impurities of the copolymer, the copolymer is treated with at least 1 Nm³ (NPT) of an extractant chosen from substances the critical temperature of which is lower than 435 K, at a temperature higher than 0.9 time the critical temperature of the extractant and a pressure higher than 0.9 time the critical pressure of the extractant.

2. process according to claim 1, characterized in that the treatment with the extractant is made to last 0.1 minute — 5 hours.

3. Process according to claim 1 or 2, characterized in that the treatment with the extractant is made to last 5 minutes 5 hours.

4. Process according to any one of claims 1—3, characterized in that the treatment with the extractant is effected at a temperature between 0.9 time the critical temperature of the extractant and 600 K.

5. Process according to any one of claims 1—4, characterized in that the treatment with the extractant is effected at a pressure between 0.9 time the critical pressure and 10 times the critical pressure of the extractant.

6. Process according to any one of claims 1—5, characterized in that, per kg impurities of the copolymer, 1—1500 Nm³ (NPT) extractant is used.

7. Process according to any one of claims 1—6, characterized in that the extractant used is $CO_2$ and/or ethylene.

**Patentansprüche**

1. Verfahren zum Reinigen eines Acrylnitrilgruppen enthaltenden Copolymers, dadurch gekennzeichnet, daß pro kg Verunreinigungen des Copo-

lymers das Copolymer mit mindestens 1 Nm³ (NPT) eines Extraktionsmittels ausgewählt aus Substanzen, deren kritische Temperatur niedriger als 435 K ist, bei einer Temperatur, die höher als das 0,9-fache der kritischen Temperatur des Extraktionsmittels ist, und bei einem Druck, der höher als das 0,9-fache des kritischen Druckes des Extraktionsmittels ist, behandelt wird.

2. Verfahren nach Anspruch 1, dadurch gekennzeichnet, daß die Behandlung mit dem Extraktionsmittel während 0,1 Minute bis 5 Stunden erfolgt.

3. Verfahren nach Anspruch 1 oder 2, dadurch gekennzeichnet, daß die Behandlung mit dem Extraktionsmittel während 5 Minuten bis 5 Stunden erfolgt.

4. Verfahren nach einem der Ansprüche 1 bis 3, dadurch gekennzeichnet, daß die Behandlung mit dem Extraktionsmittel bei einer Temperatur bewirkt wird, die zwischen dem 0,9-fachen der kritischen Temperatur und 600 K liegt.

5. Verfahren nach einem der Ansprüche 1 bis 4, dadurch gekennzeichnet, daß die Behandlung mit dem Extraktionsmittel bei einem Druck bewirkt wird, der zwischen dem 0,9-fachen des kritischen Druckes und dem 10-fachen des kritischen Druckes des Extraktionsmittels liegt.

6. Verfahren nach einem der Ansprüche 1 bis 5, dadurch gekennzeichnet, daß pro kg Verunreinigungen des Copolymers 1 bis 1500 Nm³ (NPT) Extraktionsmittel verwendet werden.

7. Verfahren nach einem der Ansprüche 1 bis 6, dadurch gekennzeichnet, daß das verwendete Extraktionsmittel $CO_2$ und/oder Äthylen ist.

**Revendications**

1. Procédé de purification d'un copolymère contenant des groupes acrylonitrile, caractérisé en ce que, par kg d'impuretés du copolymère, le copolymère est traité avec au moins 1 Nm³ (dans les conditions normales de température et de pression) d'une substance d'extraction choisie parmi les substances dont la température critique est inférieure à 435 K, à une température supérieure à 0,9 fois la température critique de la substance d'extraction et sous une pression supérieure à 0,9 fois la pression critique de la substance d'extraction.

2. Procédé selon la revendication 1, caractérisé en ce que l'on fait durer le traitement à la substance d'extraction de 0,1 minute à 5 heures.

3. Procédé selon la revendication 1 ou 2, caractérisé en ce que l'on fait durer le traitement à la substance d'extraction de 5 minutes à 5 heures.

4. Procédé selon l'une quelconque des revendications 1 à 3, caractérisé en ce que l'on effectue le traitement à la substance d'extraction à une température comprise entre 0,9 fois la température critique de la substance d'extraction et 600 K.

5. Procédé selon l'une quelconque des revendications 1—4, caractérisé en ce que l'on effectue le traitement à la substance d'extraction sous une pression comprise entre 0,9 fois la pression critique et 10 fois la pression critique de la substance d'extraction.

6. Procédé selon l'une quelconque des revendications 1—5, caractérisé en ce que, par kg d'impuretés du copolymère, on utilise 1-1500 Nm³ (dans les conditions normales de température et de pression) de substance d'extraction.

7. Procédé selon l'une quelconque des revendications 1—6, caractérisé en ce que la substance d'extraction utilisée est $CO_2$ et/ou l'éthylène.